# DEMANDE DE BREVET EUROPEEN

(11) **EP 4 574 877 A1**
(43) Date de publication de la demande: **25.06.2025**
(21) Numéro de dépôt: 24220671.2
(22) Date de dépôt: 17.12.2024
(51) Int. Cl.: C08G 59/42, C08G 59/68, C08L 63/00

(54) **SYNTHÈSE DE RÉSINE ÉPOXY-ANHYDRIDE VITRIMÈRE ACTIVÉE**

(30) Priorité: 19.12.2023 FR 2314471
(71) Demandeur: Commissariat à l'Energie Atomique et aux Energies Alternatives, 75015 Paris (FR)
(72) Inventeur: MORETTO, Enzo, 38054 Grenoble cedex 09 (FR); PILUSO, Pierre, 38054 Grenoble cedex 09 (FR)
(74) Mandataire: Germain Maureau

(57) **Abrégé**

Procédé de fabrication d'une résine époxy-anhydride vitrimère activée, destinée à la remise en forme de pièces en matériau composite comprenant une résine époxy-anhydride et des fibres de verre, le procédé de fabrication comprenant les étapes suivantes :
- a) préparation d'une solution à partir d'un mélange de trois composants précurseurs comprenant un poly-anhydride, un aminoalcool, un poly-époxy et un solvant,
- b) agitation de la solution,
- c) évaporation du solvant de sorte à obtenir un mélange précurseur de la résine époxy-anhydride vitrimère activée, et
- d) réticulation par application d'un traitement thermique de sorte à obtenir la résine époxy-anhydride vitrimère activée.

## Description

La présente invention se rapporte à la remise en forme de déchets de pièces en matériau composite à base de fibres de verre et de résine époxy-anhydride. En particulier, l'invention concerne une résine époxy-anhydride vitrimère activée, destinée à faciliter la remise en forme de ces pièces de matériaux composites. Elle propose en outre un procédé de fabrication d'une telle résine et un procédé de remise en forme desdites pièces en matériau composite.

Les matériaux composites de fibre de verre et de résine époxy sont notamment utilisés comme matériaux de structure en remplacement de métaux et permettent un allègement notable pour une large gamme d'application : le sport (cycles, sport de glisse), le transport (structure de voitures, de trains), l'aérospatial (structure d'avions, de navettes spatiales). Ces systèmes sont constitués d'une résine polymère thermodurcissable, réticulée pendant la mise en forme du matériau, et d'une armure de fibres, pouvant être de nature (principalement, fibres de carbone et fibres de verre) et d'organisation (tissées selon différents modèles, non-tissés) variables.

Ces résines thermodurcissables présentent des performances mécaniques ainsi qu'une résistance chimique élevées, grâce notamment à la haute réticulation du réseau. Mais cet aspect interdit tout recyclage en dehors de l'incinération, car ces réseaux réticulés ne peuvent être ni fondus, ni solubilisés, empêchant d'utiliser les techniques de recyclage classiques.

L'utilisation de chimies réversibles pour la synthèse et l'utilisation de réseaux réversibles constitue un nouveau domaine de recherche dans l'ingénierie des polymères. L'utilisation de réseaux réversibles permet de pallier le défaut de recyclabilité des thermodurcissables. La recherche dans ce domaine est riche d'innovations et de nombreux systèmes chimiques covalents et réversibles ont font l'objet d'étude.

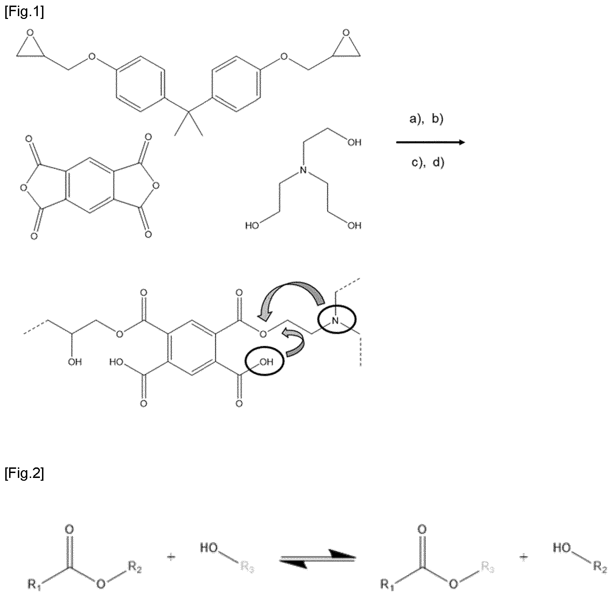

Dans le domaine des résines époxy, il existe trois grands types : époxy-amines, époxy-vinylester et époxy-anhydrides (ou époxy-esters). Parmi elles, seule les résines époxy-anhydrides présentent des propriétés de chimie réversible par nature, grâce à des fonctions esters et des groupements hydroxyles disponibles, ce qui permet d'envisager le recyclage de cette résine en la transformant en vitrimère. En effet, les fonctions esters, en présence de site réactifs libres et sous certaines conditions (en chauffant par exemple), peuvent s'échanger de proche en proche via une réaction de trans-esterification, et avoir pour conséquence une réorganisation topologique du matériau à l'échelle moléculaire (se rapporter à la figure 2 ci-dessous). Lorsque la fréquence de ces échanges est assez importante, la mise sous contrainte du matériau donne lieu à une déformation à l'échelle macroscopique, qui peut être mise à profit pour réparer ou changer la forme des pièces constituées dudit matériau. Cela ouvre la porte au recyclage des résines dans des pièces de matériaux composites endommagées ou en fin de vie.

L'utilisation de la trans-esterification dans des résines époxy-polyester a déjà fait l'objet de publications et de nombreux travaux. Les travaux actuels visent surtout à améliorer ce système sur plusieurs points : la rapidité et la température à laquelle les échanges se font, ainsi que les performances thermomécaniques des matériaux et leur résistance à l'eau et autres solvants. En effet, l'introduction de liaisons chimiques réversibles amène de nouvelles problématiques. Ces liaisons peuvent être moins stables, les matériaux les incorporant ne présentent pas les mêmes propriétés en fonction de la température ou en présence de certains solvants. Aussi, la vitesse de remise en forme du matériau est directement lié à l'efficacité de la chimie réversible utilisée. L'objectif général est d'obtenir des matériaux performants dans les conditions d'utilisation normales mais se remettant en forme rapidement.

Pour cela, des activateurs et catalyseurs sont introduits dans ces matériaux pour accélérer la chimie d'échange. La première génération d'époxy-esters vitrimères décrits dans la littérature voit la réaction d'échange activées par des activateurs mélangés dans le polymère à la manière d'un additif. Mais la quantité nécessaire se situe en général autour de 5 à 10% en masse, ce qui peut engendrer des pertes de performances du matériau. De plus, ces molécules activatrices étant libres dans le matériau, elles peuvent, à l'image de nombreux autres additifs utilisés dans l'industrie des matière plastiques, être amenées à migrer hors du matériau, amenant des pertes de performances ainsi qu'une exposition des utilisateurs et de l'environnement à des molécules indésirables, voire dangereuses.

La seconde génération d'époxy-esters vitrimères connue à ce jour consiste en l'intégration de molécules directement dans la structure de polymère, de manière covalente. Toutefois, même si des améliorations sont observées avec cette technique, il reste encore à optimiser les réactifs utilisés pour conduire à des résines aux propriétés thermomécaniques plus pertinentes ainsi qu'à une cinétique de remise en forme plus élevée.

Un des buts de la présente invention vise à pallier au moins l'un des inconvénients précités. A cet effet, l'invention propose un procédé de fabrication d'une résine époxy-anhydride vitrimère activée, destinée à la remise en forme de pièces en matériaux composites comprenant une résine époxy-anhydride et des fibres de verre, le procédé de fabrication comprenant les étapes suivantes :
- a) préparation d'une solution à partir d'un mélange de trois composants précurseurs comprenant un poly-anhydride, un aminoalcool, un poly-époxy et un solvant,
- b) agitation de la solution,
- c) évaporation du solvant de sorte à obtenir un mélange précurseur de la résine époxy-anhydride vitrimère activée, et
- d) réticulation par application d'un traitement thermique de sorte à obtenir la résine époxy-anhydride vitrimère activée.

Ainsi, le procédé de l'invention conduit à l'obtention d'une résine epoxy-anhydridre vitrimère activée en ce qu'elle contient des fonctions judicieusement choisies, dans une conformation déterminée permettant d'activer la cinétique des échanges d'ester et une remise en forme rapide. En effet, le procédé consiste en l'utilisation avantageuse d'une sélection de trois espèces chimiques : un poly-époxy, un poly-anhydride et un amino-alcool. Ces trois espèces sont capables de réagir entre elles pour former un réseau réticulé covalent comportant un grand nomdre d'esters. De plus, l'utilisation d'un poly-anhydride permet la formation d'acide carboxylique en position *beta* par rapport à l'ester (ou en position *ortho* lorsque l'anhydride est disposé sur un cycle aromatique), ce qui augmente la cinétique d'échange des esters. L'utilisation d'un amino-alcool, permet en outre, la formation d'une amine en position *beta* par rapport à l'ester et cette configuration augmente également la cinétique d'échange des esters. Enfin, l'utilisation d'un poly-époxy permet la formation de groupements hydroxyles lors de la réaction de réticulation. Ces groupements OH jouent le rôle de sites réactifs libres lors des échanges d'esters. La combinaison des groupements acides carboxyliques, amine tertiaire et hydroxyles à proximité de l'ester permet une chimie d'échange très rapide et une remise en forme très efficace.

Par ailleurs, l'utilisation de poly-anhydride en lieu et place d'anhydride et d'un poly-époxy comme classiquement utilisé permet d'obtenir une résine présentant une température de transition vitreuse plus élevée que celle de résines époxy vitrimères déjà existantes. De plus, la combinaison de ces réactifs permet de former des liaisons covalentes stables permettant de se passer de l'ajout d'un catalyseur supplémentaire qui pourrait migrer en dehors du matériau.

Par le terme «poly-époxy », on entend dans le présent document une molécule comprenant au moins deux fonctions époxy. Par le terme « poly-anhydride », on entend dans le présent document une molécule comprenant au moins deux fonctions anhydrides.

Selon une possibilité, le mélange précurseur de la résine époxy-anhydride vitrimère activée est un mélange des trois composants précurseurs ayant partiellement réticulés.

Ainsi, une fois ladite résine réticulée et durcie, elle peut être soit broyée, soit compressée à chaud directement pour former des plaques. La résine, sous forme de plaques ou broyée, peut être utilisée en mélange avec des déchets de pièces en matériau composite en vue d'obtenir un composite recyclé par compression et chauffage et une nouvelle mise en forme.

Selon une disposition, le poly-anhydride est choisi parmi des composants aromatiques. Ceci contribue à engendrer une grande contrainte dans la molécule ce qui conduit à une température de transition vitreuse élevée.

Selon une possibilité, le poly-anhydride est choisi parmi les dianhydrides et les trianhydrides, tels que le dianhydride d'acide pyromellitique (PDMA), le dianhydride de bisphénol A (BPA), le dianhydride 3,3'4,4'-benzophénonététracarboxylique (BTDA), l'anhydride mellitique, ou un mélange de ces poly-anhydrides.

Selon une possibilité, le poly-époxy est choisi parmi le diglycidyl éther de bisphénol A (DGEBA), le Tris(4-hydroxyphenyl)methane triglycidyl ether, la 4,4'-Methylenebis(N,N-diglycidylaniline), la N,N-Diglycidyl-4-glycidyloxyaniline, l'éther diglycidylique de 1,4-butanédiol, et le Bisphenol F diglycidyl ether ou un mélange de ces composés.

Selon une disposition, le poly-époxy est choisi de sorte à présenter des fonctions et une conformation géométrique proches de celle de la résine époxy du matériau composite à remettre en forme, de sorte à présenter des propriétés similaires et faciliter les interactions.

Selon une possibilité, l'aminoalcool est choisi parmi des amines tertiaires comprenant au moins deux fonctions hydroxyles, tels que la triéthanolamine (TEthA), la diéthanolmethylamine (DEthA), la tétrahydroxyéthylènediamine (THEED) ou un mélange de ces amines. Les amines tertiaires sont préférées car la présence d'amine primaire (NH2) ou secondaire (NH) permet la réaction d'addition de ces amines avec l'époxy et la formation de liaisons permanentes non réversibles, qui dans ce cas sont des réaction parasites car non-échangeables.

Selon un mode de réalisation, l'étape a) comprend au préalable la dilution du poly-anhydride dans un mono-anhydride liquide, tel que l'anhydride hexahydro-4-methylphthalique (HHMPA), l'anhydride nadique de méthyle (MNA) ou un mélange de ces mono-anhydrides.

Selon une disposition, l'étape d) de réticulation comprend l'application d'un traitement thermique à une température comprise entre 110°C et 140°C, notamment entre 120°C et 130°C. Cette température est déterminée pour optimiser la vitesse de réticulation et minimiser les réactions parasites.

Selon une possibilité, l'étape d) de réticulation comprend l'application d'un vide, notamment une pression inférieure ou égale à - 0,2 bar, et par exemple une pression inférieure ou égale à -0,5 bar.

Selon une possibilité, le rapport molaire dans la solution préparée à l'étape a) des fonctions anhydride, époxyde et hydroxyle sont compris dans une plage entre 1:1:1 et 3:1:1, et notamment un rapport molaire d'environ 2 : 1 :1. Cette configuration permet d'assurer qu'un maximum de fonctions anhydrides soit modifié en ester pour favoriser les échanges et une remise en forme avec une cinétique élevée.

Selon un deuxième aspect, l'invention propose une résine époxy-anhydride vitrimère activée, destinée à la remise en forme de pièces en matériau composite comprenant une résine époxy-anhydride et des fibres de verre, la résine époxy-anhydride vitrimère activée comprenant un réseau réticulé covalent comprenant des fonctions esters, des fonctions acides carboxyliques, des fonctions hydroxyles et des fonctions amines tertiaires permettant d'activer la cinétique des réactions d'échange, la résine époxy-anhydride vitrimère activée provenant de la réticulation d'au moins un poly-anhydride de sorte à générer un maximum d'esters dans la résine. La présence de ces fonctions permet de réaliser des réactions de trans-esterification activées, ayant pour conséquence une réorganisation topologique du matériau facile et rapide et la possibilité de remise en forme également rapide à l'échelle macroscopique.

Selon une disposition, la résine époxy-anhydride vitrimère activée provient de la réaction entre au moins un poly-époxy, au moins un poly-anhydride et au moins un aminoalcool.

Selon une possibilité, ladite résine époxy-anhydride vitrimère activée présente une température de transition vitreuse Tg supérieure ou égale à 130°C, notamment comprise entre à 130°C et 250°C, par exemple comprise entre 150°C et 200°C. Dans le cadre de la présente invention, la température de transition vitreuse Tg de la résine époxy-anhydride vitrimère activée peut être déterminée par calorimétrie différentielle à balayage (« DSC » en anglais qui est l'acronyme pour Differential Scanning Calorimetry) selon la norme internationale ISO 11357-2.

Cette température élevée de transition vitreuse Tg est notamment obtenue grâce à l'utilisation d'un poly-anhydride à structure chimique contrainte, solide à température ambiante et présentant une température de fusion élevée. Cela permet l'utilisation de ladite résine époxy-anhydride vitrimère activée en tant que matériau de structure à une température plus élevée que celle des époxy-anhydride vitrimères connues à ce jour.

Selon une disposition, la résine époxy-anhydride vitrimère activée comprend une majorité de fonctions acides carboxyliques disposée en position beta des fonctions esters ou en position ortho lorsque les fonctions acides carboxyliques et les fonctions esters sont des substituants de cycles aromatiques, une majorité de fonctions amines tertiaires est disposée en position beta des fonctions esters et une majorité de fonctions hydroxyles sont disposées en position beta des fonctions esters. Ainsi, lesdites fonctions acides carboxyliques et lesdites fonctions amines tertiaires jouent le rôle d'activateur de la cinétique d'échange des esters et les fonctions hydroxyles jouent le rôle de sites réactifs libres dans les échanges d'esters. Ceci permet une double activation ou une double catalyse de la chimie d'échange très rapide et une remise en forme optimale. Cette résine époxy-anhydride vitrimère activée comporte des caractéristiques qui permettent un traitement de recyclage par remise en forme efficace et rapide de pièces en matériaux composites à base de résine époxy-anhydride comme cela sera décrit ci-dessous. Selon un troisième aspect, l'invention propose un procédé de recyclage de pièces en matériau composite à base de résine époxy-anhydride et de fibres de verre, le procédé comprenant les étapes de :
m) fournir une résine époxy-anhydride vitrimère activée telle que précédemment décrite, la résine époxy-anhydride vitrimère activée se présentant sous forme pulvérulente,
n) fournir des particules issues d'au moins une pièce en matériau composite à base de fibres de verre dans une résine époxy-anhydride,
o) mélanger la poudre de résine époxy-anhydride vitrimère activée et les particules de matériau composite de sorte à obtenir un mélange homogène,
p) placer le mélange homogène dans un moule préalablement chauffé à une température Tm supérieure ou égale à la température de transition vitreuse Tg de la résine époxy-anhydride vitrimère activée, telle qu'une température Tm supérieure ou égale à 130°C, notamment une température comprise entre 130°C et 250°C, par exemple 200°C, et
q) appliquer une pression supérieure ou égale à 60 bars, notamment une pression comprise entre 60 et 80 bars, et par exemple environ 70 bars, pendant quelques dizaines de minutes, notamment entre 20 et 30 min, à une température supérieure ou égale à la température de transition vitreuse Tg de la résine époxy-anhydride vitrimère activée, de sorte à réaliser la remise en forme du matériau composite.

Ce procédé utilise ainsi avantageusement la résine vitrimère activée de l'invention pour une réaction avec des matériaux composites époxy-anhydride/fibres de verre donnant lieu à la formation d'un nouveau réseau covalent permettant la transformation de déchet en matériau composite en un matériau intrinsèquement recyclable par la suite. En effet, la résine époxy-anhydride vitrimère présente dans le matériau composite est capable des mêmes échanges chimiques que la résine de l'invention, mais avec une cinétique bien plus faible car ces réactions sont non activées dans ce cas. Lors de leur mélange puis compression à chaud, les deux réseaux de résines forment, via la réaction de trans-esterification, un réseau unique et réticulé. Cela permet d'intégrer le matériau composite en fin de vie dans une résine vitrimère recyclable, donnant naissance à un matériau lui-même recyclable. Notons que la température appliquée à l'étape q) est indépendante de la température de préchauffage du moule.

Selon d'autres caractéristiques, le procédé de fabrication de l'invention comporte une ou plusieurs des caractéristiques optionnelles suivantes considérées seules ou en combinaison :
- Le nombre de fonctions anhydrides est de préférence inférieur ou égal au nombre cumulé de fonctions époxydes et hydroxyles dans la solution de l'étape a).
- Le solvant utilisé à l'étape a) de préparation d'une solution est choisi parmi les solvants organiques polaires tel que le THF, anisole, diméthylacetamide, diméthylformamide, DMSO, acétonitrile, acétone, acétate d'éthyle,...
- L'étape b) d'agitation de la solution est réalisée entre la température ambiante et 50°C.
- L'étape c) d'évaporation du solvant est réalisé à une température comprise entre l'ambiante et environ 60°C de sorte à pallier la viscosité du mélange précurseur de la résine.
- Le traitement de réticulation de l'étape d) est réalisé pendant plusieurs heures, notamment pendant 10 à 20 heures, par exemple 15 heures.

D'autres caractéristiques et avantages apparaitront à la lecture de la description détaillée ci-après, d'un exemple de mise en oeuvre non limitatif, faite en référence aux figures annexées dans lesquelles :
[Fig. 1] illustre le schéma réactionnel entre les trois composants conduisant à la résine époxy-anhydride vitrimère activée selon un mode de réalisation de l'invention.
[Fig. 2] représente une vue schématique du principe de trans-estérification qui est appliqué dans l'invention.
[Fig. 3] représente des exemples de poly-anhydride, utilisés comme l'un des trois composants de l'invention.
[Fig. 4] représente des exemples d'aminoalcool, utilisés comme l'un des trois composants de l'invention.
[Fig. 5] représente un exemple de poly-époxy, utilisé comme l'un des trois composants de l'invention.
[Fig. 6] illustre le schéma réactionnel entre un poly-anhydride, un alcool et un époxy selon l'invention.
[Fig. 7] illustre le schéma réactionnel entre un poly-anhydride et un aminoalcool selon l'invention.

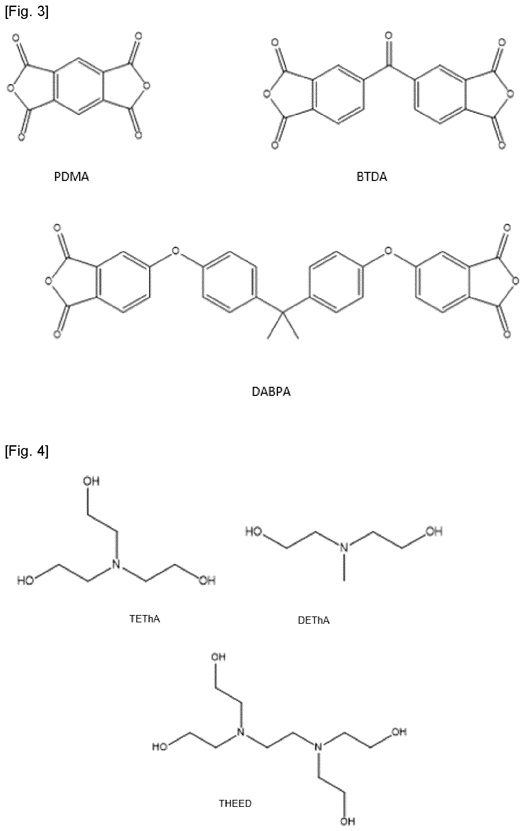

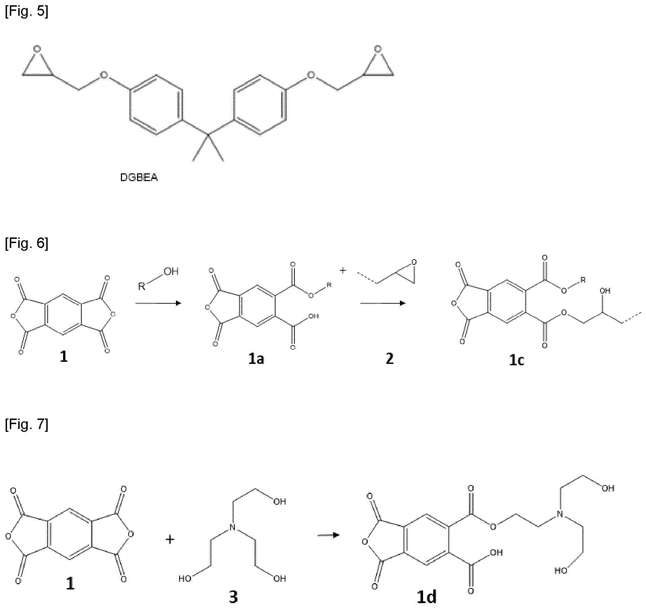

Comme illustré en figure 1, la présente invention propose la synthèse d'une résine époxy-vitrimère anhydride activée à partir de trois composants spécifiques, permettant l'augmentation de la cinétique d'une réaction de trans-estérification telle qu'illustrée sur la figure 2. Pour ce faire, le procédé de l'invention propose de former un mélange réactionnel à partir de trois solutions de composants précurseurs. Ainsi, dans un premier contenant est préparée une première solution à partir de 1 g d'acide dianhydride d'acide pyromellitique PDMA dans 40 ml de THF (figure 2). Dans un deuxième contenant est préparée une deuxième solution à partir de 0.817 g de résine DGBEA (figure 4) dans 40 ml de THF et dans un troisième contenant est préparé une troisième solution à partir de 0.228 g de triéthanolamine TEthA (figure 3) dans 40 ml de THF. Les trois solutions sont mélangées pour préparer la solution selon l'étape a) qui est agitée à température ambiante selon l'étape b) sur un délai assez court (entre 30 secondes et 2 minutes) pour éviter que la solution prenne en masse dans le récipient de l'étape b). Le rapport molaire des fonctions anhydrides, époxydes et hydroxyles est d'environ 2 : 1 :1. Puis, le solvant THF est évaporé l'air libre selon l'étape c) de sorte à obtenir un mélange précurseur de ladite résine finale dans lequel les trois composants sont pré-réticulés. Le mélange étant visqueux, il est placé dans une étuve chauffée à 60°C de sorte à compléter l'évaporation du solvant. Puis un traitement thermique selon l'étape d) est appliqué à 130°C pendant 15 heures sous une pression inférieure à 1 bar de sorte à finaliser la réticulation et obtenir la résine époxy-anhydride vitrimère activée (figure 1). Ladite résine activée est formée d'un réseau covalent comprenant des fonctions déterminées et une conformation spécifique permettant une double activation des réactions d'échanges de sorte à augmenter la cinétique de remise en forme. Notamment, ladite résine activée comprend des fonctions acides carboxyliques disposés en position *ortho* des fonctions esters lorsque les fonctions acides carboxyliques et les fonctions esters sont des substituants d'un cycle aromatique (se référer à la figure 1 et aux molécules 1a et 1d respectivement sur les figures 6 et 7), des fonctions amines tertiaires disposées en position beta de fonctions esters (se référer à la figure 1 et aux molécules 1d sur la figure 7) de sorte que les sites d'échanges sont doublement activés. Des fonctions hydroxyles sont également présentes sur le réseau covalent et jouent le rôle de sites réactifs libres lors des échanges d'esters.

Selon d'autres modes de réalisation de l'invention, le composant poly-anhydride est choisi parmi le BPA, le BTDA, un l'anhydride mellitique, ou un mélange de ces composés (figure 2). Le composant aminoalcool est choisi parmi des amines tertiaires comprenant au moins deux fonctions hydroxyles, tels que la DEthA, la THEED ou un mélange de ces amines.

Selon également un autre mode de réalisation de l'invention, le poly-anhydride est dissout dans un mono-anhydride (figure 6). Du THF peut être ajouté à cette solution selon les caractéristiques de solubilité du poly-anhydride.

L'invention propose également un procédé de recyclage de pièces en matériau composite à base de résine époxy-anhydride et de fibres de verre grâce à l'intégration de ladite résine activée (non illustré). Un exemple de réalisation du procédé de recyclage selon l'invention comprend tout d'abord la fourniture de 60g d'une résine époxy-anhydride vitrimère activée telle que précédemment décrite, préalablement broyée si nécessaire pour présenter une forme pulvérulente (étape m). A cette poudre est ajoutée 50g de particules en provenance de pièces à recycler dudit matériau composite (étape n). Une fois un mélange homogène obtenu suite à une agitation vigoureuse (étape o), il est placé dans un moule préalablement chauffé à Tm (180°C- étape p). L'ensemble est ensuite pressé avec une pression de 70 bars pendant 30 min à 180°C (étape q). La pièce remise en forme est ensuite démoulée. Elle est formée d'un matériau composite comportant des fibres de verre et une résine époxy-anhydride comprenant un réseau covalent dans lequel la résine époxy-anhydride vitrimère activée est intégrée, de sorte à pouvoir être remise en forme rapidement ou réparée localement à plusieurs reprises, sans ajout de matière nouvelle, par le même procédé de compression/chauffage.

Ainsi, la présente invention utilise les propriétés de résines vitrimères et choisit judicieusement des composants entrant dans la composition de la résine activée pour améliorer les cinétiques d'échange, favoriser la remise en forme, la réparation et la recyclabilité de pièce en matériaux composites, sans dégradation de ses propriétés mécaniques des matériaux composites ni la tenue à l'eau, au solvant, ...etc, tout en augmentant la température de transition vitreuse et ainsi le champ d'application de ces pièces.

## Revendications

1. Procédé de fabrication d'une résine époxy-anhydride vitrimère activée, destinée à la remise en forme de pièces en matériau composite comprenant une résine époxy-anhydride et des fibres de verre, le procédé de fabrication comprenant les étapes suivantes :
- a) préparation d'une solution à partir d'un mélange de trois composants précurseurs comprenant un poly-anhydride, un aminoalcool, un poly-époxy et un solvant,
- b) agitation de la solution,
- c) évaporation du solvant de sorte à obtenir un mélange précurseur de la résine époxy-anhydride vitrimère activée, et
- d) réticulation par application d'un traitement thermique de sorte à obtenir la résine époxy-anhydride vitrimère activée.

2. Procédé de fabrication selon la revendication 1, dans lequel le poly-anhydride est choisi parmi les dianhydrides et les trianhydrides, tels que le dianhydride d'acide pyromellitique (PDMA), le dianhydride de bisphénol A (BPA), le dianhydride 3,3'4,4'-benzophénonététracarboxylique (BTDA), l'anhydride mellitique ou un mélange de ces poly-anhydrides.

3. Procédé de fabrication selon la revendication 1 ou 2, dans lequel le poly-époxy est choisi parmi le diglycidyl éther de bisphénol A (DGEBA), le Tris(4-hydroxyphenyl)methane triglycidyl ether, la 4,4'-Methylenebis(N,N-diglycidylaniline), la N,N-Diglycidyl-4-glycidyloxyaniline, l'éther diglycidylique de 1,4-butanédiol, et le Bisphenol F diglycidyl ether ou un mélange de ces composés.

4. Procédé de fabrication selon l'une des revendications 1 à 3, dans lequel l'aminoalcool est choisi parmi des amines tertiaires comprenant au moins deux fonctions hydroxyles, tels que la triéthanolamine (TEthA), la diéthanolmethylamine (DEthA), la tétrahydroxyéthylènediamine THEED) ou un mélange de ces amines.

5. Procédé de fabrication selon l'une des revendications 1 à 4, dans lequel l'étape a) comprend au préalable la dilution du poly-anhydride dans un mono-anhydride liquide, tel que l'anhydride hexahydro-4-methylphthalique (HHMPA), l'anhydride nadique de méthyle (MNA) ou un mélange de ces mono-anhydrides.

6. Procédé de fabrication selon l'une des revendications 1 à 5, dans lequel l'étape d) de réticulation comprend l'application d'un traitement thermique à une température comprise entre 110°C et 140°C.

7. Procédé de fabrication selon l'une des revendications 1 à 6, dans lequel le rapport molaire dans la solution préparée à l'étape a) des fonctions anhydride, époxyde et hydroxyle sont compris dans une plage entre 1:1:1 et 3:1:1, et notamment un rapport molaire d'environ 2 : 1 :1.

8. Résine époxy-anhydride vitrimère activée, destinée à la remise en forme de pièces en matériau composite comprenant une résine époxy-anhydride et des fibres de verre, la résine époxy-anhydride activée comprenant un réseau réticulé covalent comprenant des fonctions esters, des fonctions acides carboxyliques, des fonctions hydroxyles et des fonctions amines tertiaires permettant d'activer la cinétique des réactions d'échange, la résine époxy-anhydride activée provenant de la réticulation d'au moins un poly-anhydride de sorte à générer un maximum d'esters dans la résine.

9. Résine époxy-anhydride vitrimère activée selon la revendication 8, dans laquelle une majorité de fonctions acides carboxyliques est disposée en position beta des fonctions esters ou en position ortho lorsque les fonctions acides carboxyliques et les fonctions esters sont des substituants d'un cycle aromatique, une majorité de fonctions amines tertiaires est disposée en position beta de fonctions esters et une majorité de fonctions hydroxyles est disposée en position *beta* des fonctions esters.

10. Procédé de recyclage de pièces en matériau composite à base de résine époxy-anhydride et de fibres de verre, le procédé comprenant les étapes de :
m) fournir une résine époxy-anhydride vitrimère activée selon l'une des revendications 8 ou 9 et/ou fabriquée selon le procédé de fabrication des revendications 1 à 7, la résine époxy-anhydride vitrimère activée se présentant sous forme pulvérulente,
n) fournir des particules issues d'au moins une pièce en matériau composite à base de fibres de verre dans une résine époxy-anhydride,
o) mélanger la poudre de résine époxy-anhydride vitrimère activée et les particules en matériau composite de sorte à obtenir un mélange homogène,
p) placer le mélange homogène dans un moule préalablement chauffé à une température Tm supérieure à la température de transition vitreuse Tg de la résine époxy-anhydride vitrimère activée, et
q) appliquer une pression supérieure ou égale à 60 bars, pendant quelques dizaines de minutes, à une température supérieure ou égale à la température de transition vitreuse Tg de la résine époxy-anhydride vitrimère activée de sorte à réaliser la remise en forme du matériau composite.
